# EUROPÄISCHE PATENTSCHRIFT

(11) **EP 0 625 546 B1**
(45) Veröffentlichungstag und Bekanntmachung des Hinweises auf die Patenterteilung: **13.05.1998**
(21) Anmeldenummer: 94810199.3
(22) Anmeldetag: 07.04.1994
(51) Int. Cl.: C08L 27/06, C08K 5/00, C08K 13/02

(54) **Stabilisiertes Polyvinylchlorid**
Stabilized polyvinyl chloride
Chlorure de polyvinyle stabilisé

(30) Priorität: 16.04.1993 CH 1171/93
(43) Veröffentlichungstag der Anmeldung: 23.11.1994
(73) Patentinhaber: Ciba Specialty Chemicals Holding Inc., 4057 Basel (CH)
(72) Erfinder: Drewes, Rolf, Dr., D-64678 Lindenfels (DE); Kolb, Markus, D-68723 Plankstadt (DE); Kuhn, Karl, Dr., D-64686 Lautertal (DE); Wehner, Wolfgang, Dr., D-64372 Ober-Ramstadt (DE)

(56) Entgegenhaltungen:
- FR-A- 1 114 975
- FR-A- 2 247 502
- PATENT ABSTRACTS OF JAPAN vol. 15, no. 337 (C-862) (4865) & JP-A-03 128 954 (MITSUBISHI CABLE IND LTD)
- THINIUS 'Stabilisierung und Alterung von Plastwerkstoffen' , AKADEMIE-VERLAG , BERLIN DD Kapitel 5.2.6.3 Epoxydharze * Seite 262 - Seite 267; Tabellen 21,22 *

## Beschreibung

Die Erfindung betrifft stabilisiertes Polyvinylchlorid (PVC), Stabilisatormischungen, Verfahren zur Herstellung von stabilisiertem PVC und die Verwendung von stabilisiertem PVC.

Neben Zinn- und Bleiverbindungen werden zur Stabilisierung von PVC auch Fettsäuresalze sogenannte Metallseifen verwendet, wobei es sich üblicherweise bei den Metallen um Barium, Cadmium, Zink oder Calcium handelt. Im Hinblick auf die unterschiedlichen Stabilisierungseigenschaften (Anfangsfarbe und thermische Stabilität) wird zur Erreichung einer ausgewogenen Stabilisierung jeweils eine Kombination von zwei verschiedenen Metallseifen eingesetzt, wie beispielsweise Ba/Cd-Seifen. Zur Vermeidung von Barium, Blei oder Cadmium enhaltenden Verbindungen wurden auch Ca/Zn-Seifen vorgeschlagen; hierzu beispielsweise "Plastics Additives", Herausgeber H. Gächter und H. Müller, Hanser Verlag, 3. Auflage, 1990, Seiten 287-295 und Kunststoff Handbuch PVC, Band 1 und 2, Beck/Braun, Carl Hanser Verlag.

Weiterhin wird als Costabilisatorfür PVC unter anderem vorgeschlagen, eine Epoxyverbindung einzusetzen, wobei besonders epoxidiertes Sojabohnenöl verwendet wird; hierzu beispielsweise "Plastics Additives", Herausgeber H. Gächter und H. Müller, Hanser Verlag, 3. Auflage, 1990, Seiten 303/4 und US 3,928,267. Für chloriertes Polyvinylchlorid wird auch der Einsatz von Glycidylethern von Novolakharzen als Stabilisator beschrieben, beispielsweise in der DE 34 02 408.

Es besteht jedoch weiterhin das Bedürfnis stabilisiertes PVC zur Verfügung zu haben, wobei die verwendeten Stabilisatoren physiologisch unbedenklich sein sollen und gleichzeitig eine hohe Stabilisierung ermöglichen sollen. Insbesondere sind Stabilisatoren, welche Barium, Blei oder Cadmium enthalten, zu vermeiden.

Es wurde nun gefunden, dass mit einer Mischung aus einer anorganischen oder organischen Zinkverbindung, einem endständigen Epoxid und Kreide stabilisiertes PVC eine hervorragende thermische Stabilität bei guter Anfangsfarbe und Farbhaltung aufweist. Überraschenderweise erfüllt das erfindungsgemäss stabilisierte PVC die hohen Anforderungen, die sonst nur von mit Barium-, Blei- oder Cadmiumverbindungen stabilisiertem PVC erfüllt werden. Die erfindungsgemässe Stabilisierung wird darüberhinaus ohne den Zusatz von Calciumseifen erreicht, ein solcher Zusatz ist sogar im allgemeinen unerwünscht, da er nicht zu der üblicherweise erwarteten Stabilitätsverbesserung führt.

Erfindungsgemäss wird daher stabilisiertes PVC vorgeschlagen, enthaltend (a) PVC, (b) eine anorganische oder organische Zinkverbindung, (c) eine endständige Epoxidverbindung und (d) Kreide. Es enthält vorzugsweise keine Barium-, Blei- oder Cadmiumverbindungen.

Im Rahmen dieser Erfindung sind unter (a) PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handen kann. Unter PVC ist im Rahmen dieser Erfindung jedoch kein nachchloriertes PVC zu verstehen. Bevorzugt ist PVC als Suspensions-, Masse- und Emulsionspolymerisat auch in Kombination mit Polyacrylaten.

Zweckmässig ist stabilisiertes PVC, wie oben beschrieben, enthaltend als (b) mindestens eine anorganische Zinkverbindung, wie beispielsweise Zinkoxid, hydroxid, -chlorid, -sulfid oder überbasische Zinkoxid/hydroxid Additionsverbindungen, oder eine organische Zinkverbindung aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C1-C12-Alkyl substituierten Phenolate.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der Monoester der divalenten Carbonsäuren, wie Oxalsäure, Malonsäure, Bernsteinsäure, Glutarsäure, Adipinsäure, Fumarsäure, Tallölsäure, Pentan-1,5-dicarbonsäure, Hexan-1,6-dicarbonsäuro, Heptan-1,7-dicarbonsäure, Octan-1,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure.

Bevorzugt sind Zusammensetzungen, wie beschrieben, enthaltend als (b) eine organische Zinkverbindung, insbesondere ein organisches Zinkcarboxylat einer Carbonsäure mit 7 bis 18 C-Atomen (Zinkseifen), wie beispielsweise Benzoate oder Alkanoate, bevorzugt Stearat, Oleat, Laurat, Palmitat, Hydroxystearate, Dihydroxystearate oder 2-Ethylhexanoat. Besonders bevorzugt sind Stearat, Oleat und p-tert-Butylbenzoat.

Gegebenenfalls kann auch ein Gemisch von Zinkverbindungen unterschiedlicher Struktur eingesetzt werden.

Die anorganischen oder organischen Zinkverbindungen können in einer Menge von beispielsweise 0,001 bis 5, zweckmässig 0,01 bis 5, besonders bevorzugt 0,01 bis 3 Gew-Teilen, bezogen auf 100 Gew.-Teile PVC, angewendet werden.

Die im Rahmen der Erfindung verwendbaren endständigen Epoxidverbindungen (c) können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die endständigen Epoxidverbindungen enthalten wenigstens einen Epoxyrest, insbesondere solche der Formel 1 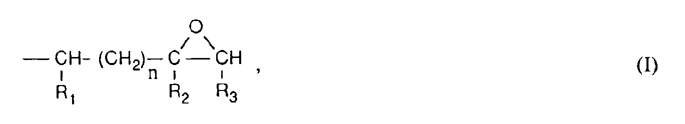 wobei dieser direkt an Kohlenstoff, Sauerstoff-, Stickstoff- oder Schwefelatome gebunden ist, worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

Beispielhaft für endständige Epoxidverbindungen sind zu erwähnen:
I) Glycidyl- und ß-Methylglycidylester erhältlich durch Umsetzung einer Verbindung mit mindestens einer Carboxylgruppe im Molekül und Epichlorhydrin bzw. Glycerindichlorhydrin bzw. ß-Methyl-epichlorhydrin. Die Umsetzung erfolgt zweckmässig in der Gegenwart von Basen

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.

Weitere im Rahmen dieser Erfindung verwendbare Epoxidverbindungen finden sich in der EP 0 506 617.

II) Glycidyl-oder (ß-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Penlan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.

Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclo- hex-3-en oder sie besitzen aromatische Kerne wie N,N-Bis-(2-hydroxyethyl)-anilin oder p,p'-Bis-(2-hydroxyethylami- no)-diphenylmethan.

Die endständigen Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenyle- ther, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylamino- phenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N"'-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.
lV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) endständige Epoxidverbindungen mit einem Rest der Formel I, worin R₁ und R₃ zusammen-CH₂-CH₂-bedeuten und n 0 ist, sind Bis-(2,3-epoxycyclopentyl)-ether, 2,3-Epoxycyclopentylglycidylether oder 1,2-Bis-(2,3-epoxycyclopen- tyloxy)-ethan. Ein endständiges Epoxidharz mit einem Rest der Formel I, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:
a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®PY 302, Araldit®PY 306;
d)feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h)flüssige Glycidylether von Carbonsäuren wie Shell®Cardura E Terephthalsäureester, Trimellithsäureester, Araldit®PY 284;
i) feste heterocyclische Epoxidharze (Triglycidylisocyanurat) wie Araldit®PT 810;
j) flüssige cycloaliphatische Epoxidharze wie Araldit®CY 179;
k) flüssige N,N,O-Triglycidylether von p-Aminophenol wie Araldit®MY 0510
I) Tetraglycidyl-4-4'-methylenbenzamin oder N,N,N',N'-Tetraglycidyldiaminophenylmethan wie Araldit®MY 720, Araldit®MY 721.

Vorzugsweise finden endständige Epoxidverbindungen mit zwei funktionellen Gruppen Verwendung. Es können aber auch prinzipiell endständige Epoxidverbindungen mit einer, drei oder mehrfunktionellen Gruppen eingesetzt werden.

Vorwiegend werden endständige Epoxidverbindungen, vor allem Diglycidylverbindungen, mit aromatischen Strukturen eingesetzt.

Gegebenenfalls kann auch ein Gemisch von endständigen Epoxidverbindungen unterschiedlicher Struktur eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die endständigen Epoxidverbindungen können in einer Menge von vorzugsweise mindestens 0,1 Teil, beispielsweise 0,1 bis 50, zweckmässig 1 bis 30 und insbesondere 1 bis 20 Gew.-Teilen, bezogen auf 100 Gew.-Teile PVC, eingesetzt werden.

Das erfindungsgemäss stabilisierte PVC kann weitere Additive enthalten. Es handelt sich beispielsweise um Weichmacher, Füllstoffe und Verstärkungsmittel (wie beispielsweise Calciumcarbonat, Silikate, Glasfasern, Talk, Kaolin, Kreide, Glimmer, Metalloxide und -hydroxide, Ruß oder Graphit), Antioxidantien, Polyole, Zeolithe, Hydrotalcite, organische Phosphite, 1,3-Diketoverbindungen, Dihydropyridine, sterisch gehinderte Amine (HALS), Lichtschutzmittel, UV-Absorber, Gleitmittel, Fettsäureester, Paraffine, Treibmittel, optische Aufheller, Pigmente, Flammschutzmittel, Antistatika, ß-Aminocrotonate (z B. wie in EP 0 465 405, S 6, Z. 9-14 erwähnt), Phosphate, Thiophosphate, Gelierhilfen, peroxidzerstörende Verbindungen, Modifikatoren und weitere Komplexbildner für Lewis-Säuren.

Als Kreide wird bevorzugt eine oberflächenbehandelte Kreide verwendet. Zur Oberflächenbehandlung werden Fettsäuren, Silane oder Titanate eingesetzt. Bevorzugt wird die Oberflächenbehandlung mit Fettsäuren bzw. Fettsäuregemischen oder technischen Fettsäuren durchgeführt, wobei C₁₀-C₃₀-Fettsäuren und speziell Stearinsäure besonders bevorzugt sind. Im allgemeinen wird die Fettsäure in einer Menge von 0,5 bis 1 % in flüssiger Form auf die noch warme Kreide aufgetragen. Die Fettsäuren setzten sich dabei teilweise zu den entsprechenden Calciumsalzen um, welche jedoch die Hohlräumen der Kreide nicht wieder verlassen können. Oberflächenbehandelte Kreiden sind allgemein bekannt und im Handel erhältlich; sie werden beispielsweise unter der Bezeichnung Omyalite 90T oder Omya EXH1 von der Firma Omya vertrieben.

Die vorzugsweise oberflächenbehandelten Kreiden können in einer Menge von vorzugsweise mindestens 10 Teilen, beispielsweise 15 bis 80, zweckmässig 25 bis 75 und insbesondere 40 bis 75 Gew.-Teilen, bezogen auf 100 Gew.-Teile PVC, eingesetzt werden.

Als organische Weichmacher kommen beispielsweise solche aus den folgenden Gruppen in Betracht:

### A) Phthalate (Phthalsäureester)

Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat.

### B) Ester aliphatischer Dicarbonsäuren, insbesondere Ester von Adipin-, Azelain- und Sebazinsäure

Beispiele fürsolche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylse- bacat und Di-iso-decylsebacat (Gemisch). Bevorzugt sind Di-2-ethylhexyladipat und Di-iso-octyladipat.

### C) Trimellithsäureester,

beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.

### D) Epoxyweichmacher

### E) Polymerweichmacher

Eine Definition dieser Weichmacher und Beispiele für solche sind i "Plastics Additives", Herausgeber H. Gächter und H. Müller, Hanser Publishers, 1990, Seite 393-396 sowie in "PVC Technology ", Herausgeber W. V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und Cg-C₁₁-Alkanolgemische. Besonders vorteilhaft sind Polyesterweichmacher aus den genannten Dicarbonsäuren und monofunktionellen Alkoholen.

### F) Phosphorsäureester

Eine Definition dieser Ester ist im vorstehend genannten Buch "Plastics Additives" auf Seite 390-393 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat_{;} Trikresylphosphat und Trixylenylphosphat. Bevorzugt ist Tri-2-ethylhexyl-phosphat und ®Reofos 50.

### G) Chlorierte Kohlenwasserstoffe (Paraffine)

### H) Kohlenwasserstoffe

I)Monoester, z.B. Butyloleat, Phenoxyethyloleat, Tetrahydrofurfuryloleat und Alkylsulfonsäureester

### J) Glykolester, z.B. Diglykolbenzoate.

Definitionen und Beispiele für Weichmacher der Gruppen G) bis J) sind den folgenden Handbüchern zu entnehmen:
"Plastics Additives", Herausgeber H. Gächter und H. Müller, Hanser Publishers, 1990, Seite 403-405 (Gruppe G)), und Seite 403 (Gruppe H)).
"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis F), insbesondere A) bis D) und F), vor allem die in diesen Gruppen als bevorzugt herausgestellten Weichmacher.

Es können auch Mischungen unterschiedlicher Weichmacher verwendet werden.

Die Weichmacher können in einer Menge von beispielsweise 5 bis 120, zweckmässig 10 bis 100 und insbesondere 20 bis 70 Gew.-Teilen, bezogen auf 100 Gew.-Teile PVC, angewendet werden.

Verwendbare 1,3-Dicarbonylverbindungen können lineare odercyclische Dicarbonylverbindungen sein. Bevorzugt werden Dicarbonylverbindungen der Formel VII verwendet, 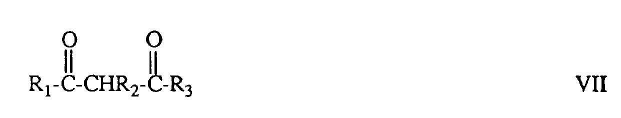 worin R₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R₅-S-R₆ oder -R₅-O-R₆ bedeutet, R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Grupe -CO-R₄ bedeutet, R₃ eine der für R₁ gegebenen Bedeutungen hat oder C₁-C₁₈-Alkoxy bedeutet, R₄ C₁-C₄-Alkyl oder Phenyl bedeutet,
R₅ C₁-C₁₀-Alkylen bedeutet und R₆ C₁-C₁₂-Alkyl, Phenyl, C₇-C₁₈-Alkylphenyl oder C₇-C₁₀-Phenylalkyl bedeutet.
Hierzu gehören die Hydroxylgruppen enthaltenden Diketone der EP-A-346 279 und die Oxa- und Thia-diketone der EP-A-307 358 ebenso wie die auf Isocyansäure basierenden Diketone der US 4,339,383.
R₁ und R₃ als Alkyl können insbesondere C₁-C₁₈-Alkyl sein, wie z.B. Methyl, Ethyl, n-Propyl, Isopropyl, n-Butyl, tert. Butyl, Pentyl, Hexyl, Heptyl, Octyl, Decyl, Dodecyl oder Octadecyl.
R₁ und R₃ als Hydroxyalkyl stellen insbesondere eine Gruppe -(CH₂)ₙ-OH dar, worin n 5, 6 oder 7 ist
R₁ und R₃ als Alkenyl können beispielsweise Vinyl, Allyl, Methallyl, 1-Butenyl, 1-Hexenyl oder Oleyl bedeuten, vorzugsweise Allyl.
R₁ und R₃ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.
R₁ und R₃ als Phenylalkyl sind insbesondere Benzyl. R₂ und R₃ als Cycloalkyl oder Alkyl-cycloalkyl sind insbesondere Cyclohexyl oder Methylcyclohexyl.
R₂ als Alkyl kann insbesondere C₁-C₄-Alkyl sein. R₂ als C₂-C₁₂-Alkenyl kann insbesondere Allyl sein. R₂ als Alkylphenyl kann insbesondere Tolyl sein. R₂ als Phenylalkyl kann insbesondere Benzyl sein. Vorzugsweise ist R₂ Wasserstoff. R₃ als Alkoxy kann z.B.

Methoxy, Ethoxy, Butoxy, Hexyloxy, Octyloxy, Dodecyloxy, Tridecyloxy, Tetradecyloxy oder Octadecyloxy sein. R₅ als C₁-C₁₀-Alkylen ist insbesondere C₂-C₄-Alkylen. R₆ als Alkyl ist insbesondere C₄-C₁₂-Alkyl, wie z.B. Butyl, Hexyl, Octyl, Decyl oder Dodecyl. R₆ als Alkylphenyl ist insbesondere Tolyl. R₆ als Phenylalkyl ist insbesondere Benzyl.

Beispiele für 1,3-Dicarbonylverbindungen der Formel VII sind Acetylaceton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Stearoyl-benzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder-octadecylester, Stearoylessigsäure-ethyl-, -propyl-, -butyl-, -hexyl-oder-octylester und Dehydracetsäure sowie deren Zink- oder Magnesiumsalze.

Bevorzugt sind 1,3-Diketoverbindungen der Formel VII, worin R₁ C₁-C₁₈-Alkyl, Phenyl, durch OH, Methyl oder Methoxy substituiertes Phenyl, C₇-C₁₀-Phenylalkyl oder Cyclohexyl ist, R₂ Wasserstoff ist und R₃ eine der für R₁ gegebenen Bedeutungen hat.

Die 1,3-Diketoverbindungen können in einer Menge von beispielsweise 0,01 bis 10, zweckmässig 0,01 bis 2 und insbesondere 0,1 bis 1 Gew.-Teilen, bezogen auf 100 Gew.-Teile PVC, angewendet werden.

Als Antioxidantien kommen beispielsweise in Betracht:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(a-Methylcyclohexyl)4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyi-6-(1'-methyl-heptadec-1'-yl)-phenol, 2,4-Dimethyl-6-(1'-methyl-tridec-1'-yl)-phenol, Octylphenol, Nonylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyi-hydrochinon, 2,6-Diphenyl-4-octadecyloxyphenol, 2,6-Di-tert-butyi-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyi-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.- amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(a-methylbenzyl)-4-nonylphenol], 2,2'-Methylen-bis-[6-(a,a-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.
7. Hydroxybenzyliene Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octyl- mercapto-4,6-bis-(3,5-di-tert-butyl-4-hydroxyanilino)-1,3,5-triazin, 2-Octylmercapto-4,6-bis-(3,5-di-tert-butyl-4-hydro- xyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyi-4-hydroxybenzyl)-isocyanurat, 1,3,5-Tris-(4-tort-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioc- tadecyl-5-tert-butyl-4-hydroxy-3-methylbenzylphosphonat, Ca-Salz des 3,5-Di-tert-butyl-4-hydroxybenzyl-phosphonsäure-monoethylesters, Triphenylphosphit, Diphenylalkylphosphite, Phenyldialkylphosphite, Tris-(nonylphenyl)phosphit, Trilaurylphosphit, Tridecylphosphit, Trioctadecylphosphit, Distearyl-pentaerythritdiphosphit, Tris-(2,4-di-tert-buty-Iphenyl)-phosphit, Diisodecylpentaerythrit-di-phosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butyl-phenyl)-pentaerythritdiphosphit, Tristearyl-sorbittriphosphit, Tetrakis-(2,4-di-tert-butyl-phenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyldibenz[d,g]-1,3,2-dioxaphos- phocin, Bis-(2,4-di-tert-butyl-6-methylphenyl)methylphosphit, Bis-(2,4-di-tert-butyl-6-methylphenyl)-ethylphosphit, (C₁₉H₁₉-C₆H₄)_{1,5}-P-(O-C₁₂₋₁₃H₂₅₋₂₇)_{1,5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)-ethyl-isocyanurat, N, N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid_{;} 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-di-tert-butyl-4-hydroxy- phenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind phenolische Antioxidantien, insbesondere der Gruppen 1-5 und 12, und Antioxidantien der Gruppe 10: ganz besonders 2,2-Bis-(4-hydroxyphenyl)-propan, Ester der 3,5-Di-tert-butyl-4-hydroxyphenylpropionsäure mit Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmässig 0,1 bis 10 und insbesondere 0,1 bis 5 Gew.-Teilen, bezogen auf 100 Gew.-Teile PVC, angewendet werden.

Als UV-Absorber und Lichtschutzmittel kommen beispielsweise in Betracht:
1. 2-(2'-Hydroxyphenyl)-benztriazole, wie z. B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl) phenyl)-benztriazol 2-(3',5'-Di-tert-butyl-2'-hydroxyphenyl)-5-chlor-benztriazol, 2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphe- nyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]: Umesterungsprodukt von 2- [3'-tert-Butyl-5'-(2-methoxycarbonylethyl)-2'-hydroxy-phenyl]-benztriazol mit Polyethylenglycol 300; 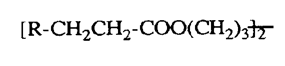 mit R = 3'-tert-Butyl-4'-hydroxy-5'-2H-benztriazol-2-yl-phenyl.
2. 2-Hydroxybenzophenone, wie z B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. a-Cyan-ß,ß-diphenylacrylsäure-ethylester bzw. -isooctylester, a-Carbomethoxy-zimtsäuremethylester, a-Cyano-ß-methyl-p-methoxy-zimtsäuremethylester bzw. -butylester, a-Carbomethoxy-p-methoxy-zimtsäure-methylester, N-(ß-Carbomethoxy-ß-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure- monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-pipe- ridyl)-succinat, Bis-(1,2,2,6,6-pentamethylpiperidyl)-sebacat, n-Butyl-3,5-di-tert-butyl-4-hydroxybenzyl-malonsäure- bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1 ,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperi- dyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)suc- cinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphe- nyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht: Ester der ß-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat oder Ethylenglykolbismercaptoacetat.

Als Gleitmittel kommen beispielsweise in Betracht:
Montanwachs, Fettsäureester, PE-Wachse, Amidwachse, Chlorparaffine, Glycerinesteroder Erdalkaliseifen. Verwendbare Gleitmittel sind auch in "Plastics Additives", Herausgeber H. Gächter und H. Müller, Hanser Verlag, 3. Auflage, 1990, Seiten 466-470 beschrieben. Für die Verwendung von Calciumseifen gilt, dass diese in für Gleitrnittel üblichen Mengen, bevorzugt kleiner 0,3 Teile, besonders bevorzugt kleiner 0,2 Teile je 100 Teile PVC, eingesetzt werden. Bevorzugt ist stabilisiertes PVC ohne Calciumseifen.

Als Polyole kommen beispielsweise in Betracht:
Pentaerythrit, Dipentaerythrit, Tripentaerythrit, Bistrimethylolpropan, Bistrimethylolethan, Trismethylolpropan, Sorbit, Maltit, Isomaltit, Lactit, Isomalt, Lycasin, Mannit Lactose, Leucrose, Tris-(hydroxyethyl)-isocyanurat, Palatinit, Tetramethylolcyclohexanol, Tetramethylolcyclopentanol, Tetramethylolcyclopyranol, Glycerin, Diglycerin, Polyglycerin oder 1-0-a-D-Glycopyranosyl-D-mannit-dihydrat.

Die Polyole können in einer Menge von beispielsweise 0,01 bis 20, zweckmässig 0,1 bis 20 und insbesondere 0,1 bis 10 Gew.-Teilen, bezogen auf 100 Gew.-Teile PVC, angewendet werden.

Als Phosphite kommen organische Phosphite der allgemeinen Formel P(OR)₃ in Betracht, wobei die Reste R gleiche oder verschiedene Alkyl-, Alkenyl-, Aryl- oder Aralkyl-Reste bedeuten. Bevorzugte organische Phosphite sind solche der Formeln 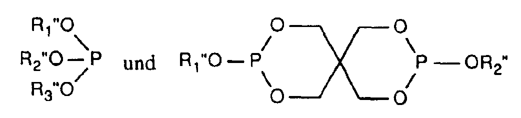 worin R₁", R₂" und R₃" gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R₁", R₂" und R₃" C₆-C₁₈-Alkyl; so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R₁ ", R₂" und R₃" beispielsweise Tolyl, Ethylphenyl, Xylyl Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, Diphenyldecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythritdiphosphit und Gemische.

Bevorzugte organische Phosphite sind Distearyl-pentaerythrit-diphosphit, Trisnonylphenylphosphit, Tridecyl-phosphit, Diphenyl-decyl-phosphit und Phenyl-didecyl-phosphit.

Die organischen Phosphite können in einer Menge von beispielsweise 0,01 bis 5, zweckmässig 0,05 bis 3 und insbesondere 0,1 bis 1 Gew.-Teilen, bezogen auf 100 Gew.-Teile PVC, angewendet werden.

Als Verbindungen aus der Reihe der Hydrotalcite oder Zeolithe kommen sowohl die natürlich vorkommenden Mineralien wie auch synthetisch hergestellte Verbindungen in Betracht.

Verbindungen aus der Reihe der Hydrotalcite können durch die allgemeine Formel I, 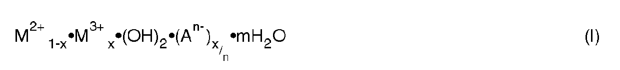 wobei
M²+ = Mg Ca, Sr, Zn, Sn und/oder Ni ist,
M3+ = Al, B oder Bi ist,
Aⁿ⁻ ein Anion mit der Valenz n darstellt,
n eine Zahl von 1-4 ist,
x eine Zahl von 0-0,5 ist und
m eine Zahl von 0-2 ist.

Aⁿ⁻ ist bevorzugt OH-, Cl⁻, Br-, 1-, ClO₄-, HCO₃-, CH₃COO-, C₆H₅COO-, CO₃2⁻, SO₄²⁻, 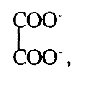 (CHOHCOO)₂²⁻, (CHOH)₄CH₂OHCOO-. C₂H₄(COO)₂²⁻, (CH₂COO)₂²⁻, CH₃CHOHCOO-, SiO₃²⁻, SiO₄⁴⁻, Fe(CN)₆³⁻, Fe(CN)₆⁴⁻ oder HPO₄²⁻ darstellt, beschrieben werden; weitere Beispiele finden sich in DE 41 06 403.

Andere Hydrotalcite, die zweckmässig eingesetzt werden können, sind Verbindungen mit der allgemeinen Formel la, 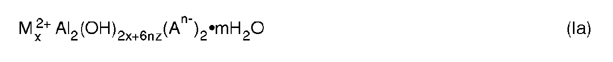 wobei in vorliegender Formel la M²⁺ wenigstens ein Metall aus der Reihe von Mg und Zn darstellt und Mg bevorzugt ist, Aⁿ⁻ ein Anion, beispielsweise aus der Reihe von CO₃²⁻, 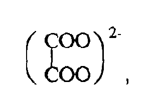 OH- und S²⁻ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel I, 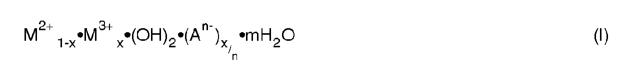 wobei M²+ die Bedeutung von Mg oder einer festen Lösung von Mg und Zn hat, Aⁿ⁻ für CO₃²⁻ steht, x eine Zahl von 0 bis 0,5 ist und m eine Zahl von 0 bis 2 ist.

Ganz besonders bevorzugt sind Hydrotalcite der Formeln 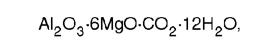 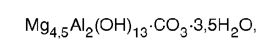 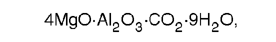 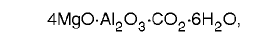 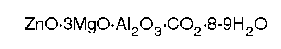 oder

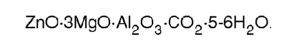

Die Hydrotalcite können in einer Menge von beispielsweise 0,1 bis 20, zweckmässig 0,5 bis 10 und insbesondere 0,5 bis 5 Gew.-Teilen, bezogen auf 100 Gew.-Teile PVC, angewendet werden.

Zeolithe können durch die allgemeine Formel (X) 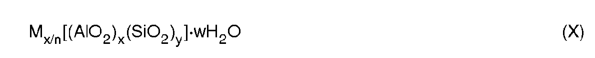 wobei
n die Ladung des Kations M,
M ein Element der ersten oder zweiten Hauptgruppe, sowie Zink,
y : x eine Zahl zwischen 0,8 und unendlich, vorzugsweise zwischen 0,8 und 10,5 und
w eine Zahl zwischen 0 und 300 ist,

### beschrieben werden.

Weiter sind erfindungsgemäss verwendbare Zeolithe aus "Atlas of Zeolite Structure Types", W.M. Meier und D.H. Olson, Verlag Butterworths, 2. Auflage 1986 bekannt.

Zu Zeolithen im weiteren Sinne sind auch Aluminiumphosphate mit Zeolithstruktur zu rechnen.

Die bevorzugten an sich bekannten Zeolithe weisen einen durchschnittlichen wirksamen Porendurchmesser von 3-5 Ä auf und können nach bekannten Methoden hergestellt werden. Besonders bevorzugt sind Zeolithe vom Typ NaA, die einen durchschnittlichen wirksamen Porendurchmesser von 4 Ä besitzen, weshalb sie auch als Zeolithe 4A bezeichnet werden.

Besonders bevorzugt sind kristalline Natriumalumosilikate, deren Teilchengrösse wenigstens weitaus überwiegend im Bereich von 1 -10 µ liegt.

In einer bevorzugten Ausführung der Erfindung können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich 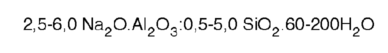 liegt. Dieser Ansatz wird in üblicher Weise zur Kristallisation gebracht. Dies geschieht vorteilhafterweise dadurch, dass man den Ansatz wenigstens 1/2 Stunde lang auf 70-120°C, vorzugsweise auf 80-95°C unter Rühren erwärmt. Das kristalline Produkt wird auf einfache Weise durch Abtrennen erhalten und nachgewaschen und dann getrocknet.

Im Rahmen der Erfindung lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200°C erhitzt. Aus der Vielzahl brauchbarer Dispergiermittel sind als Beispiele Natriumlaurylethersulfat_{;} Natriumpolyacrylat und das Natriumsalz der 1-Hydroxyethan-1,1-diphosphonsäure zu nennen.

Bevorzugt ist stabilisiertes PVC, wie oben beschrieben, enthaltend mindestens eine der Verbindungen der Formeln 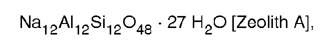 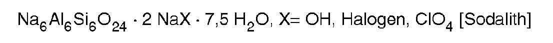 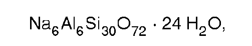 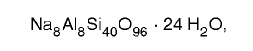 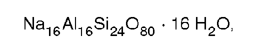 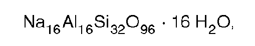 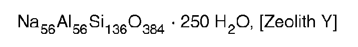 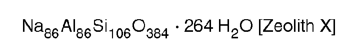 oder die durch teilweisen bzw. vollständigen Austausch der Na-Atome durch Li-, K-, Mg-, Ca-, Sr- oder Zn-Atome darstellbaren Zeolithe wie

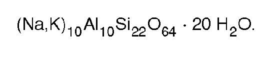

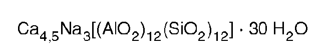

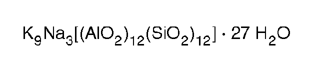

Die Zeolithe können in einer Menge von beispielsweise 0,1 bis 20, zweckmässig 0,5 bis 10 und insbesondere 0,5 bis 5 Gew.-Teilen, bezogen auf 100 Gew.-Teile PVC, angewendet werden.

Bevorzugt ist stabilisiertes PVC enthaltend (a) PVC, (b) eine organische Zinkverbindung, insbesondere 0,001-5,0 Teile je 100 Teile PVC, und (c) eine endständige Epoxidverbindung, insbesondere 0,1-5,0 Teile je 100 Teile PVC, sowie gegebenenfalls Kreide, insbesondere mindestens 10 Teile je 100 Teile PVC, und/oder ein phenolisches Antioxidans, insbesondere 0,01-10,0 Teile je 100 Teile PVC.

Bevorzugt ist ferner stabilisiertes PVC, das zusätzlich einen Weichmacher, insbesondere 5-120 Teile je 100 Teile PVC, enthält.

Bevorzugt ist ferner stabilisiertes PVC, das zusätzlich eine 1,3-Diketoverbindung, insbesondere 0,01-10 Teile je 100 Teile PVC, enthält.

Bevorzugt ist ferner stabilisiertes PVC, das zusätzlich ein Polyol, insbesondere 0,01-20 Teile je 100 Teile PVC, enthält.

Bevorzugt ist ferner stabilisiertes PVC, das zusätzlich einen Zeolith, insbesondere 0,1-20 Teile je 100 Teile PVC, enthält.

Bevorzugt ist ferner stabilisiertes PVC, das zusätzlich ein Hydrotalcit, insbesondere 0,1-20 Teile je 100 Teile PVC, enthält.

Bevorzugt ist ferner stabilisiertes PVC, das zusätzlich ein organisches Phosphit, insbesondere 0,01 -5 Teile je 100 Teile PVC, enthält.

Bevorzugt ist ferner stabilisiertes PVC, das zusätzlich ein Dihydropyridin, insbesondere 0,01-5 Teile je 100 Teile PVC, enthält.

Bevorzugt ist ferner stabilisiertes PVC, das zusätzlich ein sterisch gehindertes Amin, insbesondere 0,01-5 Teile je 100 Teile PVC, enthält.

Besonders bevorzugt ist stabilisiertes PVC, das neben PVC, organischer Zinkverbindung, endständiger Epoxidverbindung, Kreide und phenolischem Antioxidans sowohl eine 1,3-Diketoverbindung wie ein Polyol enthält.

Besonders bevorzugt ist stabilisiertes PVC, das neben PVC, organischer Zinkverbindung, endständiger Epoxidverbindung, Kreide und phenolischem Antioxidans sowohl eine 1,3-Diketoverbindung wie einen Hydrotalcit enthält.

Besonders bevorzugt ist stabilisiertes PVC, das neben PVC, organischer Zinkverbindung, endständiger Epoxidverbindung, Kreide und phenolischem Antioxidans sowohl eine 1,3-Diketovorbindung wie einen Zeolith enthält.

Ein weiterer Gegenstand der vorliegenden Erfindung ist eine Stabilisatormischung enthaltend eine anorganische oder organische Zinkverbindung eine endständige Epoxidverbindung und Kreide. Für die einzelnen Mischungsbestandteile gelten die vorstehend erläuterten Bevorzugungen, ebenso kann die Stabilisatormischung die oben beschriebenen weiteren Bestandteile enthalten.

Ein weiterer Gegenstand der vorliegenden Erfindung ist die Verwendung einer anorganischen oder organischen Zinkverbindung in Kombination mit einer endständigen Epoxidverbindung und Kreide zur Stabilisierung von PVC. Für die einzelnen Stabilisatoren sowie das PVC selber gelten die vorstehend erläuterten Bevorzugungen, ebenso kann zusätzlich einer der oben beschriebenen weiteren Bestandteile verwendet werden.

Das erfindungsgemässe stabilisierte PVC kann auf an sich bekannte Weise hergestellt werden, wozu man unter Verwendung an sich bekannter Vorrichtungen, wie Kalander, Mischer, Kneter, Extruder und dergleichen, die genannten Stabilisatoren und gegegbenenfalls weitere Zusätze mit dem PVC vermischt. Hierbei können die Stabilisatoren einzeln oder in Mischung zugegeben werden oder auch in Form sogenannter Masterbatches.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgiessen, Sintern oder Spinnen, ferner Extrusions-Blasen oder eine Verarbeitung nach dem Plastisol-Verfahren. Das stabilisierte PVC kann auch zu Schaumstoffen verarbeitet werden.

Das erfindungsgemässe PVC eignet sich besonders für Halbhart- und Weich-Rezepturen, insbesondere in Form von Weichrezepturen für Drahtummantelungen, Kabelisolierungen, welche besonders bevorzugt ist. In Form von Halbhart-Rezepturen eignet sich das erfindungsgemässe PVC besonders für Dekorationsfolien, Schaumstoffe, Agrarfolien, Schläuche, Dichtungsprofile und Bürofolien.

In Form von Hart-Rezepturen eignet sich das erfindungsgemäss stabilisierte PVC besonders für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Beispiele für die Anwendung des erfindungsgemässen PVC als Plastisol sind Kunstleder, Fussböden, Textilbeschichtungen, Tapeten, Coil-Coatings und Unterbodenschutz für Kraftfahrzeuge.

Beispiele für Sinter-PVC-Anwendungen des erfindungsgemäss stabilisierten PVC sind Slush, Slush Mould und Coil-Coatings.

Die folgenden Beispiele erläutern die Erfindung weiter, ohne sie darauf zu beschränken. Teile und Prozente beziehen sich, wie auch in der übrigen Beschreibung, auf das Gewicht, sofern nicht anders angegeben.

### Beispiele:

Eine PVC-Zusammensetzung wird durch Vermischen der einzelnen Komponenten gemäss nachfolgender Tabellen hergestellt (Mengenangaben in Gew.-Teilen).

Die Bestandteile werden während 5 Minuten auf einem Mischwalzwerk bei 190°C homogenisiert, so dass man einen 0,3-0,5 mm dicken Film erhält.

Die Bestimmung der Langzeitstabilität erfolgt durch einen statischen Hitztest ("stat.H.") nach DIN 53381, wobei das Probestück bei 190°C in einem Testofen gelagert wird und die Zeit bis zur Schwärzung der Probe bestimmt wird.

Eine weitere Bestimmung der Langzeitstabilität ("VDE-Test") erfolgt durch die Ermittlung derthermischen Stabilität nach DIN VDE 0472. Das Probestück wird hierbei in ein unten zugeschmolzenes Glasrohr (AR-Glas der Firma Peco-Laborbedarf GmbH, Darmstadt) in einem Ölbad bei 200°C erwärmt und man bestimmt die Zeit bei der eine sichtbare Rotfärbung (entsprechend einem pH-Wert von 3) des pH-Universalindikatorpapieres beobachtet wird

Eine weitere Bestimmung der Stabilität des PVC erfolgt durch den Dehydrochlorierungstest ("DHC-Test"), welcher in Anlehnung an DIN 53381, Bl. 3 durchgeführt wird. Hierbei wird bei der jeweils angegebenen Temperatur die Zeit bis zum Anstieg der Dehydrochlorierungskurve gemessen.

Die in den folgenden Tabellen verwendeten Abkürzungen bedeuten:
AO-1: Bisphenol-A
AO-2: Octadecyl-3-(3,5-di-tert.butyl-4-hydroxyphenyl)propionat
AO-3: Pentaerythrityl-tetrakis-3-(3,5-Di-tert-butyl-4-hydroxyphenyl)propionat
AO-4: (C₉H₁₉-C₆H₄-O)_{1,5}-P-(O-C_{12/13}H_{25/27})_{1,5}
AO-5: Dihydropyridin 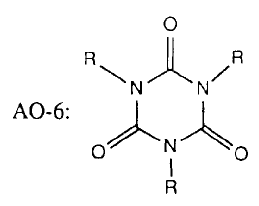
mit R = (CH₂)₂-0-C(0)-CH₂-C(0)-CH₃
D-1: Stearoylbenzoylmethan
D-2: Trishydroxyethylisocyanat
D-3: Isooctylbenzoylmethan
D-4: Dibenzoylmethan
E-1: Bisphenol-A-diglycidylether (Araldit® GY 250)
E-2: Bisphenol-F-diglycidylether (Araldit® GY 281)
E-3: Polyglycidylether von Phenolformaldehyd Novolak (Araldit® GY 1180) E-4: Polyglycidylether von Tetraphenylethan (CG Epoxy Resin^{g} 0163)
E-5: Cycloaliphatisches Epoxidharz (Araldit® CY 179)
E-6: Bisphenol-F-diglycidylether (Araldit® PY 306)
E-7: Trimellithsäuretriglycidylester
E-8: Terephthalsäurediglycidylester
E-9: Mischung E-7 und E-8
H-1: Alkamizer®IV (Hydrotalcit der Firma Kyowa)
Kreide: mit ca. 0,75% Stearinsäure oberflächenbehandelte Kreide (Omya EXH1 bzw. Omyalite T90 der Firma Omya)
P-1: reduzierte Maltose (Malbit®CR der Firma Cerestar)
P-2: reduzierte Lactose (Lactit)
P-3: a-D(+) Lactose
P-4: β-D(+) Lactose
P-5: Palatinose
P-6: D(+) Maltose
P-7: Isomaltit
P-8: Leucrose
P-9: Pentaerythrit
P-10: Dipentaerythrit
P-11: Sorbit
P-12: Tetramethylolcyclohexanol
P-13: Di-trimethylolpropan
PVC-1: PVC K-Wert 70
W-1: Weichmacher Di-iso-decylphthalat
Z-1: Wessalith P®, 4A-Zeolith der Firma Degussa
Zn-1: Zinkstearat
Zn-2: Zinkhydroxyd
Zn-3: Zinksulfid
Zn-4: basisches Zinkoctoat
Zn-5: Zinklaurat
Zn-6: Zinkacetat
Zn-7: Zinkbenzoat
Zn-8: Zinkoxid

zu Vergleichszwecken benutzte, nicht erfindungsgemässe Verbindung: E-V1: epoxidiertes Sojabohnenöl

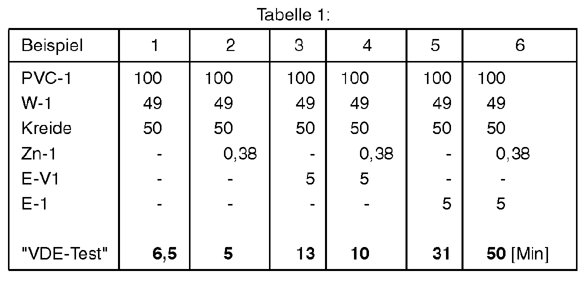

Beispiele 1-4 (nicht erfindungsgemäss) zeigen die durch die Zugabe von Zinkstearat (Zn-1) erwartete Verschlechterung der Langzeitstabilität, sowohl bei der Grundmischung (Beispiel 1 und 2) als auch bei einer Mischung, die epoxidiertes Sojabohnenöl (E-V1) enthält (Beispiele 3 und 4). Im Gegensatz dazu zeigt die letzte Spalte der Tabelle 1 die mit der Erfindung erreichte Verbesserung der Langzeitstabilität durch die Kombination einer Zinkverbindung (Zn-1) und eines endständigen Epoxids (E-1).

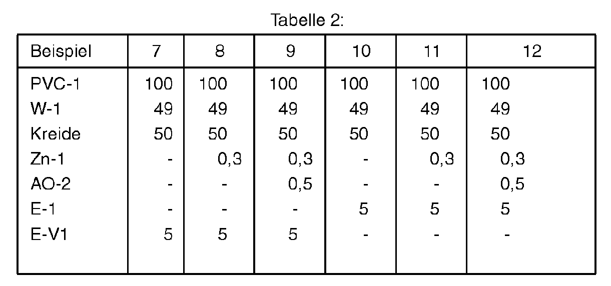

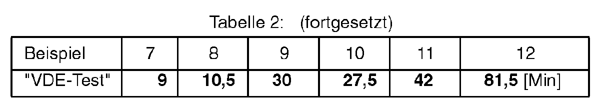

Die Beispiele 11 und 12 zeigen die Langzeitstabilität bei Verwendung einer erfindungsgemässen Rezeptur; bei den nicht-erfindungsgemässen Beispielen 7-10 liegt diese wesentlich niedriger. Erst die Verwendung eines zusätzlichen Antioxidans (AO-2) im nicht-erfindungsgemässen Beispiel 9 bewirkt einen deutlichen Anstieg der Langzeitstabilität, wohingegen die erfindungsgemässe Kombination einer Zinkverbindung (Zn-1) und eines endständigen Epoxids (E-1) in Beispiel 11 schon einen besseren Wert liefert und dieser durch ein Antioxidans (AO-2) noch wesentlich gesteigert werden kann

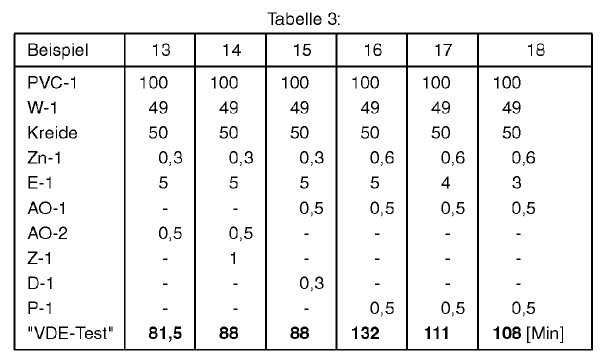

Die Beispiele 13-16 zeigen die erfindungsgemäss mögliche zusätzliche Verwendung von Antioxidantien (AO-1 und AO-2), Zeolith (Z-1), 1,3-Diketoverbindung (D-1) und Polyol (P-1).

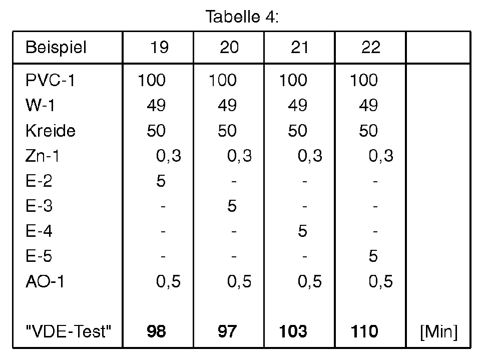

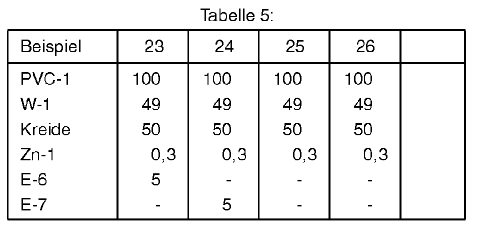

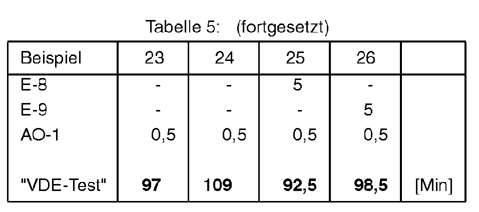

Die erfindungsgemässen Beispiele 19-26 zeigen die Werte der Langzeitstabilität für verschiedene Klassen von endständigen Epoxiden (E-2 bis E-9).

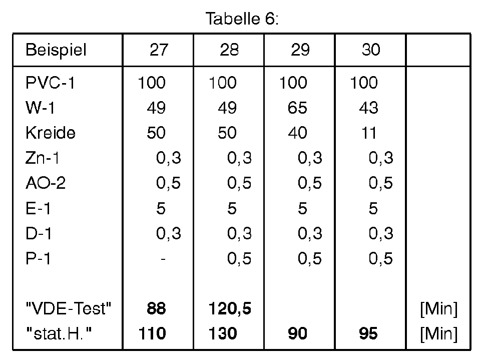

Die Tabelle 6 zeigt die Verwendung eines Polyols (P-1) als weiteren möglichen Stabilisator.

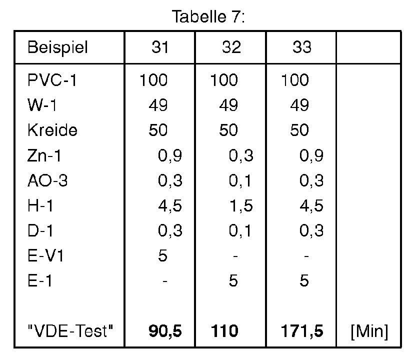

Die erfindungsgemässen Beispiele 32 und 33 zeigen die Verwendung von Hydrotalcit (H-1) als zusätzlichem Additiv, wobei mit einem Drittel der Menge der Additive (Z-1, AO-3, H-1, D-1) eine höhere Langzeitstabilität erreicht wird im Vergleich zu dem nicht-erfindungsgemässen Beispiel 31.

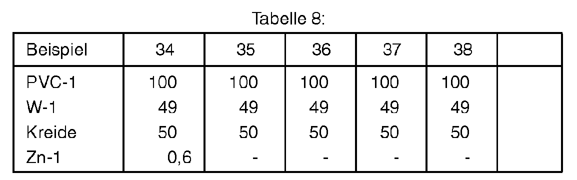

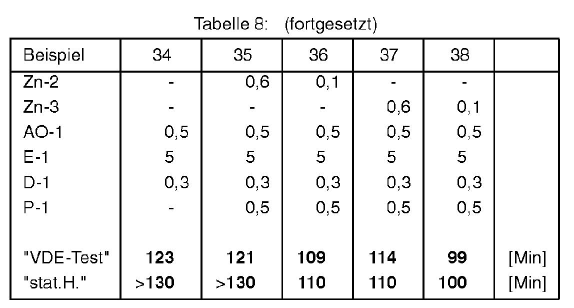

Die Beispiele 35 bis 38 zeigen die Verwendung anorganischer Zinkverbindungen (Zn-2 und Zn-3) als mögliche erfindungsgemässe Zinkverbindung.

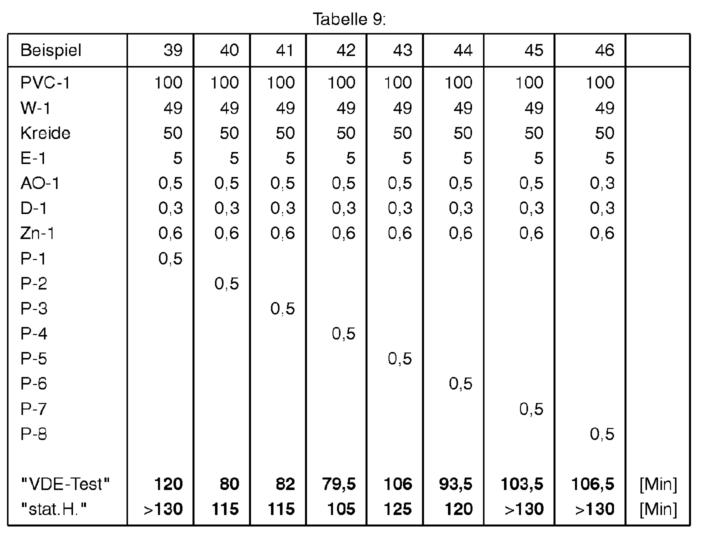

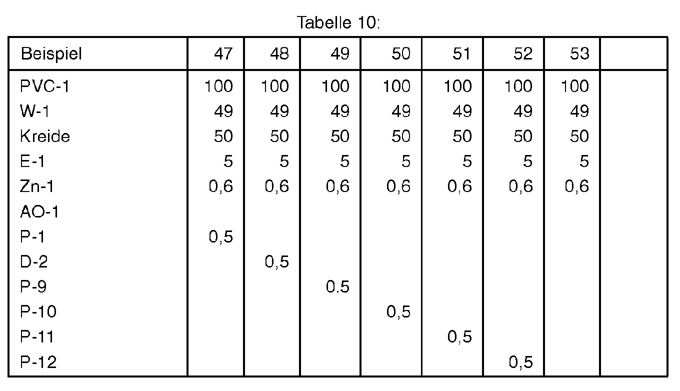

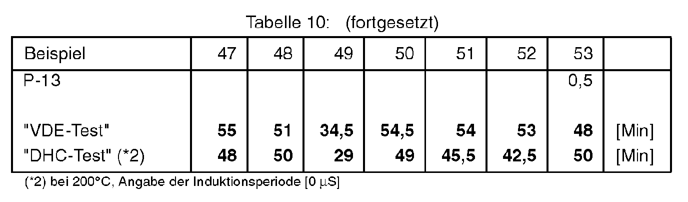

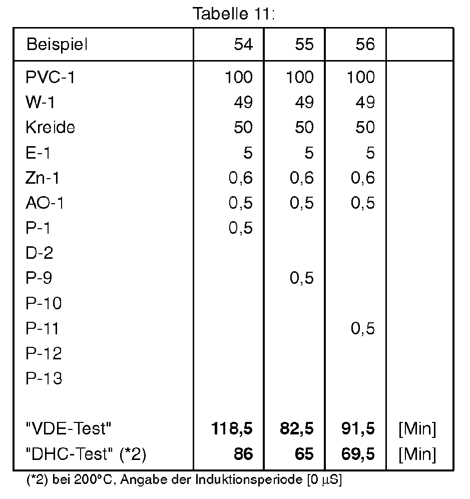

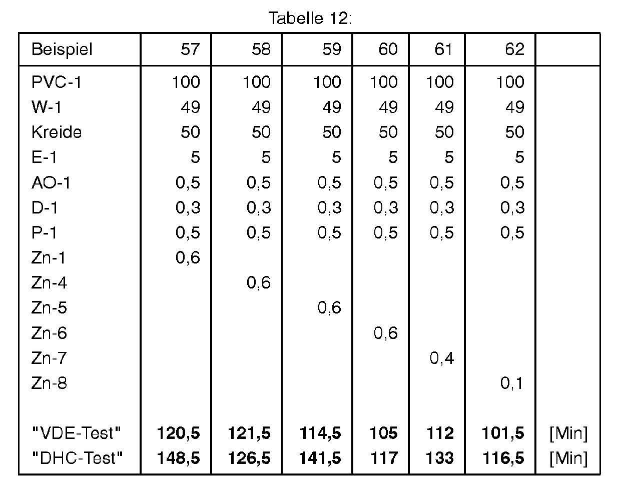

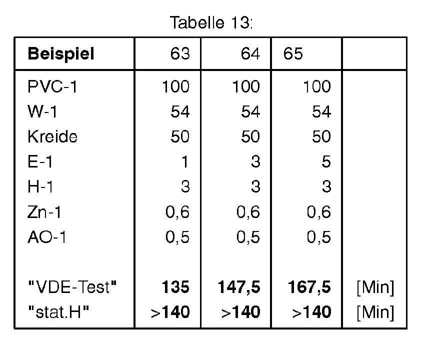

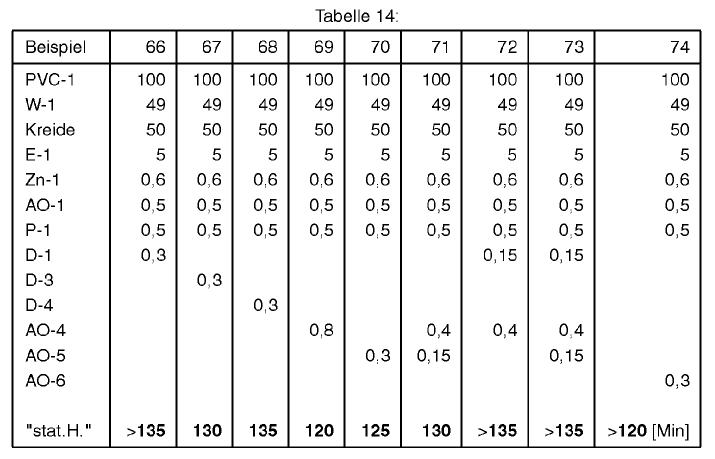

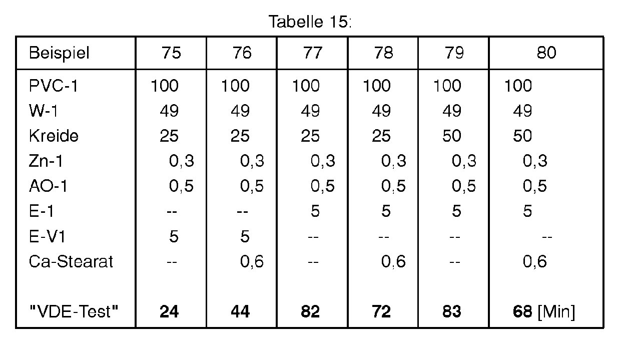

Die nicht erfindungsgemässen Beispiele 75 und 76 zeigen bei Verwendung eines nichtendständigen Epoxides (E-V1) eine niedrige Stabilisierung, welche durch Calciumstearat verbessert werden kann, ohne jedoch an die erfindungsgemäss erreichbaren Werte zu gelangen.

## Patentansprüche

1. Stabilisiertes PVC, enthaltend (a) PVC, (b) eine anorganische oder organische Zinkverbindung, (c) eine endständige Epoxidverbindung und (d) Kreide.

2. Stabilisiertes PVC gemäss Anspruch 1, enthaltend als (b) eine organische Zinkverbindung ein Zinkcarboxylat einer Carbonsäure mit 7 bis 18 C-Atomen.

3. Stabilisiertes PVC gemäss Anspruch 1, enthaltend als (c) eine endständige Epoxidverbindung mit einer aromatischen Struktur.

4. Stabilisiertes PVC gemäss Anspruch 1, enthaltend zusätzlich Stoffe ausgewählt aus der Gruppe der Weichmacher, Füllstoffe und Verstärkungsmittel, Antioxidantien, Polyole, Zeolithe, Hydrotalcite, organischen Phosphite, 1,3-Diketoverbindungen, Dihydropyridine, sterisch gehinderte Amine (HALS), Lichtschutzmittel, UV-Absorber, Gleitmittel, Fettsäureester, Paraffine, Treibmittel, optischen Aufhellern, Pigmente, Flammschutzmittel, Antistatika, ß-Aminocrotonate, Phosphate, Thiophosphate, Gelierhilfen, peroxidzerstörenden Verbindungen, Modifikatoren und weitere Komplexbildner für Lewis-Säuren.

5. Stabilisiertes PVC gemäss Anspruch 1, enthaltend (a) PVC, (b) 0,001-5,0 Teile je 100 Teile PVC einer organischen Zinkverbindung und (c) 0,1-5,0 Teile je 100 Teile PVC einer endständigen Epoxidverbindung.

6. Stabilisiertes PVC gemäss Anspruch 1, enthaltend zusätzlich ein phenolisches Antioxidans.

7. Stabilisiertes PVC gemäss Anspruch 1, enthaltend zusätzlich einen Weichmacher.

8. Stabilisiertes PVC gemäss Anspruch 1, enthaltend zusätzlich eine 1,3-Diketoverbindung.

9. Stabilisatormischung enthaltend eine anorganische oder organische Zinkverbindung, eine endständige Epoxidverbindung und Kreide.

10. Stabilisatormischung gemäss Anspruch 9, enthaltend eine organische Zinkverbindung, eine endständige Epoxidverbindung, Kreide und ein phenolisches Antioxidans.

11. Stabilisatormischung gemäss Anspruch 9, enthaltend eine organische Zinkverbindung, eine endständige Epoxidverbindung, Kreide, ein phenolisches Antioxidans, eine 1,3-Diketoverbindung und ein Polyol.

12. Stabilisatormischung gemäss Anspruch 9, enthaltend eine organische Zinkverbindung, eine endständige Epoxidverbindung, Kreide, ein phenolisches Antioxidans, eine 1,3-Diketoverbindung und einen Hydrotalcit.

13. Stabilisatormischung gemäss Anspruch 9, enthaltend eine organische Zinkverbindung, eine endständige Epoxidverbindung, Kreide, ein phenolisches Antioxidans, eine 1,3-Diketoverbindung und einen Zeolith.

14. Verwendung einer anorganischen oder organischen Zinkverbindung in Kombination mit einer endständigen Epoxidverbindung und Kreide zur Stabilisierung von PVC.

15. Verfahren zur Herstellung von stabilisiertem PVC, dadurch gekennzeichnet, dass man unter Verwendung von Vorrichtungen, wie Kalander, Mischer, Kneter, Extruder eine Stabilisatormischung gemäss Anspruch 9 und gegegbenenfalls weitere Zusätze mit dem PVC vermischt.

16. Verwendung des stabilisierten PVC gemäss Anspruch 1 zur Herstellung von aus Halbhart- oder Weich-PVC herstellbaren Formkörpern.

17. Verwendung gemäss Anspruch 16 zur Herstellung von Drahtummantelungen, Kabelisolierungen, Dekorationsfolien, Schaumstoffen, Agrarfolien, Schläuche, Dichtungsprofilen und Bürofolien.

## Claims

1. Stabilized PVC comprising (a) PVC, (b) an inorganic zinc compound, (c) a terminal epoxide compound and (d) chalk.

2. Stabilized PVC according to claim 1, comprising a zinc carboxylate of a carboxylic acid having 7 to 18 carbon atoms as (b) an organic zinc compound.

3. Stabilized PVC according to claim 1, wherein (c) is a terminal epoxide compound having an aromatic structure.

4. Stabilized PVC according to claim 1, wherein additional substances are present selected from the group consisting of plasticizers, fillers and reinforcing materials, antioxidants, polyols, zeolites, hydrotalcites, organic phosphites, 1,3-diketo compounds, dihydropyridines, sterically hindered amines (HALS), light stabilizers, UV absorbers, lubricants, fatty acid esters, paraffins, blowing agents, optical brighteners, pigments, flameproofing agents, antistatics, ß-aminocrotonates, phosphates, thiophosphates, gelling aids, peroxide-destroying compounds, modifiers and further complexing agents for Lewis acids.

5. Stabilized PVC according to claim 1, comprising (a) PVC, (b) 0.001-5.0 parts, per 100 parts of PVC, of an organic zinc compound and (c) 0 1-5.0 parts, per 100 parts of PVC, of a terminal epoxy compound.

6. Stabilized PVC according to claim 1, wherein a phenolic antioxidant is additionally present.

7. Stabilized PVC according to claim 1, wherein a plasticizer is additionally present.

8. Stabilized PVC according to claim 1, wherein a 1,3-diketo compound is additionally present.

9. A stabilizer mixture comprising an inorganic or organic zinc compound, a terminal epoxide compound and chalk.

10. A stabilizer mixture according to claim 9, comprising an organic zinc compound, a terminal epoxide compound, chalk and a phenolic antioxidant

11. A stabilizer mixture according to claim 9, comprising an organic zinc compound, a terminal epoxide compound, chalk, a phenolic antioxidant, a 1,3-diketo compound and a polyol.

12. A stabilizer mixture according to claim 9, comprising an organic zinc compound, a terminal epoxide compound, chalk, a phenolic antioxidant, a 1,3-diketo compound and a hydrotalcite.

13. A stabilizer mixture according to claim 9, comprising an organic zinc compound, a terminal epoxide compound, chalk, a phenolic antioxidant, a 1,3-diketo compound and a zeolite.

14. The use of an inorganic or organic zinc compound in combination with a terminal epoxide compound and chalk for stabilizing PVC.

15. A process for the preparation of stabilized PVC, which comprises mixing a stabilizer mixture according to claim 9 and, if desired, further additives with the PVC using equipment such as calenders, mixers, compounds, extruders.

16. The use of stabilized PVC according to claim 1 for the production of mouldings which can be produced from semi rigid or flexible PVC.

17. The use according to claim 16 for the production of wire sheaths, cable insulations, decorative films, foams, agricultural sheeting, tubes, sealing profiles and office films.

## Revendications

1. PVC stabilisé contenant (a) du PVC, (b) un composé de zinc inorganique ou organique, (c) un composé à groupe époxyde terminal et (d) de la craie.

2. PVC stabilisé selon la revendication 1, contenant en tant que (b) un composé organique de zinc, un carboxylate de zinc d'un acide carboxylique avec 7 à 18 atomes de carbone.

3. PVC stabilisé selon la revendication 1, contenant en tant que (c) un composé à groupe époxyde terminal avec une structure aromatique.

4. PVC stabilisé selon la revendication 1, contenant en plus des substances prises dans le groupe comportant des plastifiants, des charges et des agents de renfort, des antioxydants, des polyols, des zéolites, des hydrocalcites, des phosphites organiques, des composés 1,3-dicarbonylé, des dihydropyridines, des amines à encombrement stérique (HALS), des photoprotecteurs, des absorbeurs d'UV, des lubrifiants, des esters d'acides gras, des paraffines, des porogènes, des azurants optiques, des pigments, des agents ignifugeants, des antistatiques, des ß-aminocrotonates, des phosphates, des thiophosphates, des adjuvants de gélification, des composés de destruction de peroxyde, des agents modificateurs et autres agents complexants des acides de Lewis.

5. PVC stabilisé selon la revendication 1, contenant (a) du PVC, (b) de 0,001 à 5,0 parties pour 100 parties de PVC d'un composé de zinc organique et (c) de 0,1 à 5 parties pour 100 parties de PVC d'un composé à groupe époxyde terminal.

6. PVC stabilisé selon la revendication 1, contenant en plus un antioxydant phénolique.

7. PVC stabilisé selon la revendication 1, contenant en plus un plastifiant.

8. PVC stabilisé selon la revendication 1, contenant en plus un composé 1,3-dicarbonylé.

9. Mélange de stabilisants contenant un composé de zinc organique ou inorganique, un composé à groupe époxyde terminal et de la craie.

10. Mélange de stabilisants selon la revendication 9, contenant un composé de zinc organique, un composé époxyde terminal, de la craie et un antioxydant phénolique.

11. Mélange de stabilisants selon la revendication 9, contenant un composé de zinc organique, un composé époxyde terminal, de la craie, un antioxydant phénolique, un composé 1,3-dicarbonylé et un polyol.

12. Mélange de stabilisants selon la revendication 9, contenant un composé de zinc organique, un composé à groupe époxyde terminal, de la craie, un antioxydant phénolique, un composé 1,3-dicarbonylé et un hydrotalcite.

13. Mélange de stabilisants selon la revendication 9, contenant un composé de zinc organique, un composé à groupe époxyde terminal, de la craie, un antioxydant phénolique, un composé 1,3-dicarbonylé et une zéolite.

14. Utilisation d'un composé organique ou inorganique de zinc en combinaison avec un composé à groupe époxyde terminal et de la craie pour stabiliser du PVC.

15. Procédé pour la préparation du PVC stabilisé, caractérisé en ce que l'on mélange le PVC et un mélange de stabilisants selon la revendication 9, et éventuellement d'autres additifs en utilisant des dispositifs tels que des calandres, des mélangeurs, des malaxeurs, des extrudeuses.

16. Utilisation du PVC stabilisé selon la revendication 1, pour la fabrication de corps moulés que l'on peut préparer à partir de PVC semi-rigide ou souple.

17. Utilisation selon la revendication 16, pour la préparation de gaines de fils, d'isolation de câbles, de feuilles pour la décoration, de matières expansées, de feuilles pour agriculture, des tuyaux souples, de joints et feuilles de bureau.
